# EUROPEAN PATENT SPECIFICATION

(11) **EP 0 601 145 B1**
(45) Date of publication and mention of the grant of the patent: **27.08.1997**
(21) Application number: 93911383.3
(22) Date of filing: 24.05.1993
(51) Int. Cl.: B65D 83/00, B05B 11/00

(54) **INSERTABLE BARRIER BAG OR LINER FOR A NARROW NECK DISPENSING CONTAINER AND METHOD OF FILLING SUCH A BARRIER BAG OR LINER THROUGH THE SYPHON TUBE**
EINSETZBARER BARRIERESACK ODER SCHICHT FÜR EINEN AUSGABEBEHÄLTER MIT ENGEM HALS UND VERFAHREN ZUM FÜLLEN EINES SOLCHEN PAPIERSACKES ODER EINER SOLCHEN SCHICHT DURCH EIN SIPHONROHR
SAC OU DOUBLURE DE BARRAGE INSERABLE POUR RECEPTACLE DE DISTRIBUTION A COL ETROIT ET PROCEDE DE REMPLISSAGE DUDIT SAC OU DE LADITE DOUBLURE DE BARRAGE PAR LE SIPHON TUBULAIRE

(30) Priority: 22.05.1992 US 887032; 17.03.1993 US 32585
(43) Date of publication of application: 15.06.1994
(60) Divisional application: 96117030.5
(73) Proprietor: MESHBERG, Philip, Palm Beach, FL 33480 (US)
(72) Inventor: MESHBERG, Philip, Palm Beach, FL 33480 (US)
(74) Representative: Jack, Bruce James
(86) International application number: US9304856
(87) International publication number: WO9324392

(56) References cited:
- EP-A- 0 193 054
- EP-A- 0 473 994
- EP-A- 0 499 538
- WO-A-82/02034
- DE-A- 2 710 984
- FR-A- 2 655 315
- US-A- 3 361 303
- US-A- 4 625 897
- US-A- 4 865 224

## Description

### Background of the Invention

### Field of the Invention

The present invention relates to a dispenser including a dispensing pump and a dispensing container. More particularly, the present invention relates to a dispensing container which includes a barrier bag for protecting the dispensed contents from contamination within the container. The present invention also includes a syphon tube through which the container may be filled.

### Description of the Related Art

It is generally known to provide a barrier bag within a dispensing device to protect the contents contained within the dispenser from any other materials which may be in the container. For example, U.S. Patent Nos. 4,008,830; 4,020,978; 4,457,455; 4,457,454; 4,696,415; 5,004,123; 5,012,956; 5,020,691: 5,115,944; 5,135,137; 5,137,179; 5,143,294; 5,156,295; 5,156,299; 5,156,300 and 5,176,294 each show dispensing devices wherein a barrier bag is used to surround and seal the dispensed contents within the dispensing container. Often, the barrier bag is used to prevent contact between a pressurized gas used to propel the contents out, e.g. in an aerosol device, and the contents themselves. In other prior art devices, the barrier bag is used to prevent contact between the dispensed contents and air which may be contained within the container.

In the prior art devices containing a barrier bag, it is often necessary to use a special fitting on the upper portion of the container to allow for the insertion and filling of the barrier bag. This special fitting makes prior art barrier bag systems incompatible with standard dispensing containers, and also requires additional assembly steps. Furthermore, the prior art devices containing barrier bags are not constructed to be used with conventional non-vented pumps which include a vented container structure. Finally, the prior art devices are normally filled through the bottleneck, with the dip tube being inserted after filling. For viscous products, such: an arrangement often results in difficulty in priming the pump.

EP-A-0473994 discloses a dispenser comprising an outer container bottle of resiliently deformable plastics, a thin deformable inner container within the outer container and a cap incorporating valves for allowing the release of the contents of the inner container when the outer container and hence the inner container is squeezed and a second valve for allowing air to enter from the atmosphere into the space between the inner and outer containers when such squeezing is relaxed, to allow the outer container to resume its original shape. The dispensing valve communicates with a passage communicating in turn with the interior of the inner container whilst the space between the inner and outer containers communicates through vents between the neck of the outer container and a tubular insert portion of the cap, with the second valve.

EP-A-0499538, which is an intermediate document, discloses a dispenser comprising an outer container in the form of a cylinder, an annular piston slidable along the cylinder and confining within the cylinder a body of a fluid to be dispensed, a central dip tube extending sealingly through the piston and a dispensing pump mounted on the dip tube.

EP-A-0193054 discloses a dispenser similar to that of EP-A-0499538.

FR-A-2655315 discloses a dispenser comprising an outer container bottle of resiliently deformable plastics, a thin deformable inner container within the outer container and a cap incorporating an outlet for release of the contents of the inner container when the outer container and hence the inner container is squeezed and valves for allowing air to enter from the atmosphere into the space between the inner and outer containers when such squeezing is relaxed, to allow the outer container to resume its original shape. A perforated pipe extends from the outlet within the inner container to ensure that the interior of the inner container remains in communication with the outlet.

US-A-4625897 discloses a dispenser comprising a squeeze bottle carrying a dip tube which extends to the bottom of the bottle. A vent communicates the space at the top of the bottle within the bottle with atmosphere.

US-A-3361303 discloses a liquid or paste dispenser comprising a rigid outer container, an inflatable inner liner for containing the product to be dispensed and arranged around a longitudinally grooved rod defining, with the liner, a space connected with a discharge outlet and, through the discharge outlet, with a manually operable discharge valve, the whole being mounted in a cap. Vents through the cap communicate between the atmosphere and the space between the expansible liner and the outer container. The contents of the inner liner are dispensed by the pressure induced in the medium within the inner liner by the elastic tension in the latter in its expanded condition.

WO-A-82/02034 discloses a liquid or paste dispenser comprising a rigid outer container, an inflatable inner liner containing the product to be dispensed and having a neck portion connected with a discharge outlet in a cap and, through the discharge outlet, with a manually operable discharge valve carried by the cap. The product is dispensed by the pressure induced in the medium within the inner liner by the elastic tension in the latter in its expanded condition.

US-A-4865224 discloses a dispenser comprising a resilient, squeezable outer container and flexible inner container or bag containing the product to be dispensed and having an outlet or neck sealed to the interior of an outlet or neck of the outer container. A passage extending between atmosphere and the space between the inner and outer containers accommodates a one way valve allowing air to enter said space from atmosphere but not to pass in the opposite direction.

DE-A-2710984 discloses a dispenser comprising an outer container, and a flexible inner bag containing the product to be dispensed and having a neck connected with a flange clamped between a neck rim of the outer container and a cap screwed onto the neck of the outer container. The cap carried a manually operable pump connected with a suction tube extending within the flexible inner bag.

According to one aspect of the invention there is provided a barrier structure for holding a product to be dispensed comprising
a fitment including an axially inner end, said fitment including a venting path and a flexible bag sealingly secured to said axially inner end of said fitment,
characterised in that the barrier structure includes
a dip tube connected to said axially inner end of said fitment and extending axially within the interior of said flexible bag.

The barrier structure, including the flexible bag or liner, can be automatically inserted through the neck of a conventionally-shaped plastic bottle or container.

According to another aspect of the invention, there is provided a dispensing apparatus comprising an outer container
a barrier structure according to the first aspect received in said outer container, with said flexible bag disposed within the container and said fitment being engaged with said outer container, said venting path communicating between atmosphere and a space defined between the exterior of said flexible bag and the interior of said outer container,
the dispensing apparatus including a pump connected to the fitment and in fluid communication with the dip tube.

A preferred embodiment of the present invention includes structure for venting air from the interior of the barrier bag while the bag is being filled with product, as well as structure for venting air in the space between the interior walls of the container and the exterior wall of the barrier bag.

The venting structures are preferably provided in a fitting which is designed to fit within the neck of a container or bottle. The fitting is designed so that a bag made of a barrier material can be sealed on an outer surface of the fitting to provide a leakproof seal of the barrier bag to the fitting. The barrier bag is affixed in a position so that it clears the neck of the container when the fitting is inserted into the bottle or container, allowing the full expansion of the bag within the walls of the container.

The dip tube of the barrier structure is of a diameter which permits the barrier bag to be wrapped around the dip tube before insertion in the bottle or container. The barrier bag remains wrapped around the dip tube by its own adhesion properties, static adhesion, or through use of an adhesive, and can thereby be easily and automatically inserted into the container through the neck of the container prior to a filling operation. Because the dip tube is attached to the fitting structure and barrier bag when they are inserted into the container, a dip tube structure need not be attached to the pump structure when it is connected to the container.

The fact that the barrier bag is wrapped around the dip tube before filling is an advantageous feature because it minimises the amount of air trapped in the barrier bag, allowing filling of the barrier bag at maximum speed. The present invention is therefore advantageous because it allows easy assembly and filling of a dispensing container with an interior barrier bag and may be used on any conventionally shaped dispensing container or bottle used in conjunction with a conventional non-vented pump.

The preferred barrier structure in accordance with the present invention is easy to insert into a container, and easy to fill once inserted into the container, without the use of complicated assembly or filling equipment. This arrangement is particularly advantageous when used with a viscous product, since it eliminates an air gap in the dip tube, which can make the pump hard to prime.

The present apparatus is particularly useful in that it does not require disassembly and reassembly of the pump structure during the filling process. The present invention therefore is much more economical and efficient, and allows easy priming of the pump.

Brief Description of the Drawings
FIGURE 1 shows a cross-sectional view of the present invention, with the barrier bag in an expanded state;
FIGURE 2 shows a cross-sectional bottom view of the barrier bag and fitment of the present invention;
FIGURES 3a and 3b show cross-sectional views of the fitment of the present invention; and
FIGURE 4 shows a cross-sectional view of the present invention, with the barrier bag wrapped around the dip tube.

### Description of the Preferred Embodiment

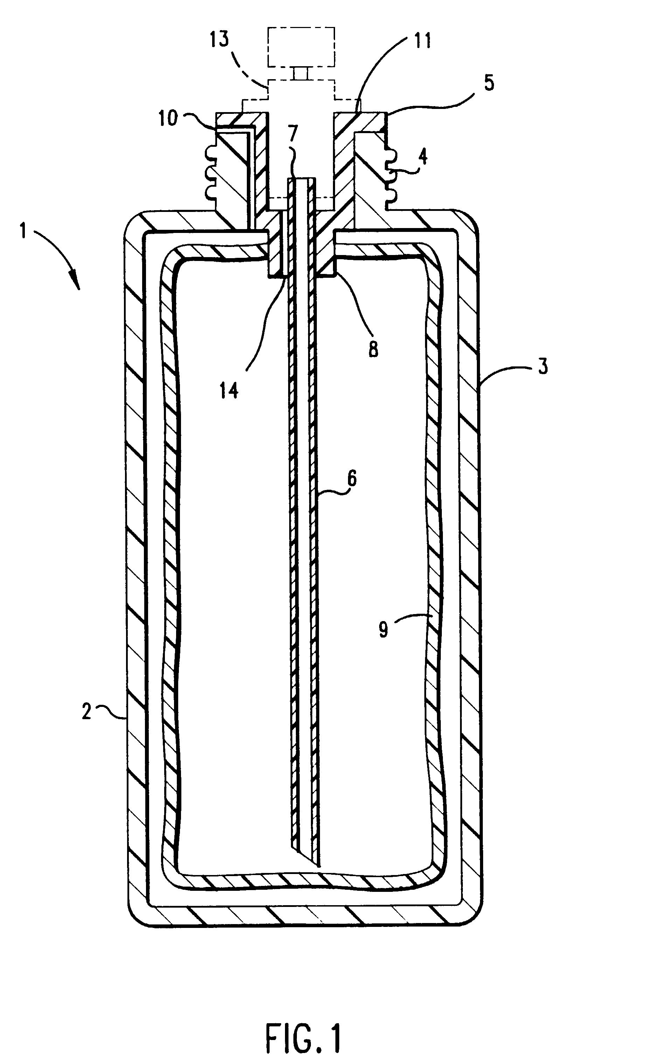

Figure 1 shows an embodiment of the present dispensing device. A dispenser 1 includes a dispensing container 2. Dispensing container 2 may be of a conventional form which includes a relatively wide body portion 3 and a relatively narrow neck portion 4. Neck portion 4 can include threads for engagement with threads on a cap (not shown), or a cap could be crimped or attached by any known means to neck portion 4.

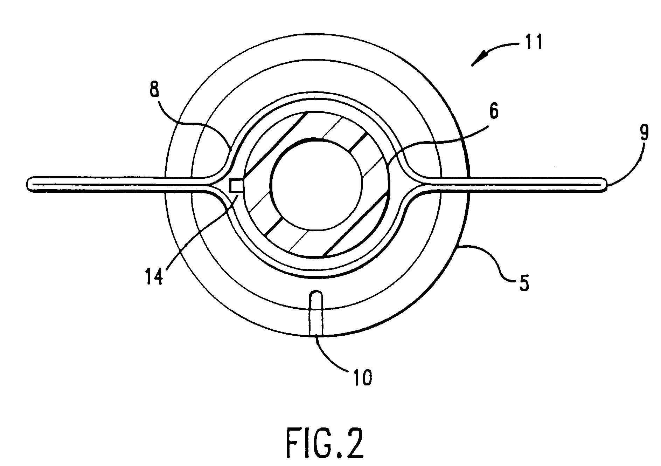

Inserted within container is a dip tube 6 for conveying a dispensed product from the container to a pump structure 13. Dip tube 6 is connected to a fitment 11 via a dip tube retaining portion 8 which retains the dip tube 6 and a barrier bag 9 in the container 2. As shown in Figure 2, the upper portion of barrier bag 9 is sealed (through conventional means e.g. ultrasonic welding or adhesives) to fitment 11 via the dip tube retaining portion 8, so as to seal the interior of barrier bag 9 from the interior of container 2. Figure 2 shows the barrier bag 9 in a flattened condition, for example when it is first attached to the fitment 11.

Barrier bag 9 is constructed of a thin sheet of a barrier film (e.g. foil or a polymeric material) which is bonded around the edges to form a sealed structure. As can be seen in Figure 2, the upper edges of the film which makes up the barrier bag 9 are bonded together at their radially outer ends, and as described above the radially inner portions of the upper edges of the film are bonded to the fitment 11 so that the bag is sealed to the fitment 11. The radially outer and lower edges of the film are bonded together to form a sealed barrier bag 9.

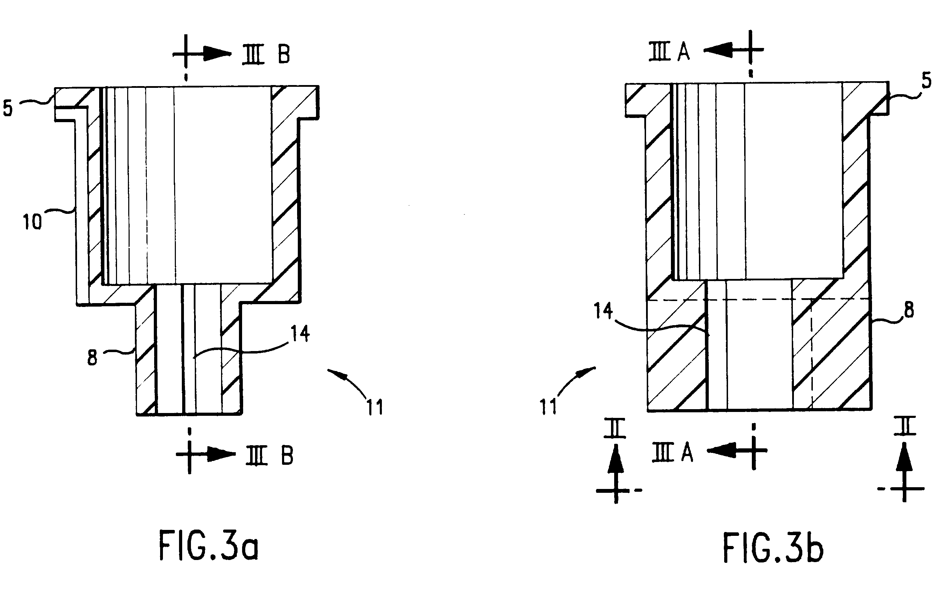

Figures 2, 3a and 3b show the particular structure of the fitment of the present invention. As can be seen in Figure 2, dip tube retaining portion 8 includes an outer surface upon which the barrier bag 9 is bonded to form a seal. A vent structure 10 on the outer surface of fitment 11 allows the interior of the container 2 to be vented to the atmosphere to maintain atmospheric pressure on the exterior of the barrier bag 9. A second vent structure 14 passes through the interior of the dip tube retaining portion 8 between the dip tube 6 and the dip tube retaining portion 8. As will be described below, this second vent structure 14 allows air to be vented out of the dip tube 6 and barrier bag 9 during filling. Fitment 11 includes a flange 5 to allow engagement of the fitment 11 with the neck 4 of container 2.

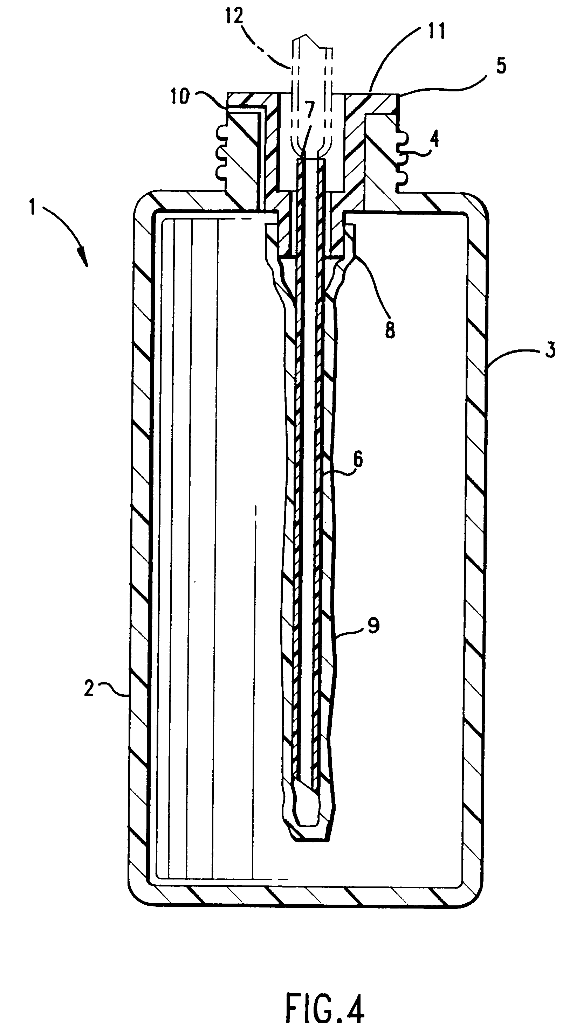

Figure 4 shows the barrier bag 9 and fitment 11 in their configuration immediately after insertion into container 2. In order to allow easy insertion of the bag 9 into a conventional container 2, the bag is initially wrapped around the dip tube 6 so as to exhibit a low cross-sectional profile. The barrier bag 9 can be retained in a position wrapped around the dip tube 6 through its own adhesive properties (as with some thermoplastics), through static adherence, or through the use of a low shear-strength adhesive on the exterior of the barrier bag 9. Although the barrier bag 9 is preferably wrapped around the dip tube 6, the barrier bag could also be collapsed around the dip tube in any other equivalent manner, including using a pleated barrier bag 9 which is collapsed in an "accordion" manner around the dip tube 6.

After the dip tube 6, barrier bag 9, and fitment 11 structures are inserted as a unit into the container 2, the barrier bag can be inflated to the shape shown in Figure 1. Inflation can be accomplished by an air blast directed from above down the dip tube 6, or can occur during filling of the barrier bag 9 with a product to be dispensed. To fill the barrier bag 9 with a product to be dispensed, a filling nozzle 12 (shown in dotted lines in Figure 4) is inserted into the interior of fitment 11 to engage the top 7 of dip tube 6, and product is dispensed down the dip tube 6 and into the interior of the barrier bag 9 until the barrier bag 9 is filled with product. A vent structure 10, consisting of a groove channelled into the exterior of the fitment 11, is used during filling to vent air into the interior of the container 2 which is displaced during filling of the barrier bag 9. A second vent structure 14 is used to vent air initially contained within the dip tube 6 and barrier bag 9 to the atmosphere as this air is displaced by product during filling of the barrier bag 9.

After barrier bag 9 is filled with product, a conventional pump structure 7 (shown in dotted lines in Figure 1) is inserted into fitment 11 and attached by any known conventional mechanism. The upper end 7 of dip tube 6 projects upwardly into fitment 11 so that it can be inserted directly into the inlet to pump 13. Pump structure 13 can include any form of conventional dispensing actuator/dispensing nozzle structure. Thus, as is known in the art, as an actuator on the pump 13 is actuated, product will be drawn into the pump 13 and dispensed out a nozzle on actuator. During the return stroke of the pump, product is drawn into the interior of pump 13 through dip tube 6; the atmospheric pressure which exists in the container 2 interior - by way of the venting structure 10 - allows fluid to be drawn into the pump 13 and the barrier bag 9 to gradually collapse around dip tube 6. Eventually, the barrier bag 9 will completely collapse around dip tube 6 as product is dispensed, so that removal of the dip tube 6, barrier bag 9 and fitment 11 can be easily accomplished through neck 4 of container 2. The container then can be refilled using the process described above, using a new barrier bag 9/dip tube 6/fitment.

As will be readily understood, the barrier bag 9, retaining structure 8 and container could have a variety of shapes, depending upon the particular application. Furthermore, the vent structures 10 and 14 could be located in a variety of locations on the disclosed structure, as long as they provide the recited functions above. It will be understood that multiple variations of the disclosed structure are contemplated within the scope of the claims below.

## Claims

1. A barrier structure (7-11) for holding a product to be dispensed comprising
a fitment (11) including an axially inner end (8), said fitment including a venting path (10) and a flexible bag (9) sealingly secured to said axially inner end of said fitment,
characterised in that the barrier structure includes
a dip tube (6) connected to said axially inner end of said fitment and extending axially within the interior of said flexible bag (9).

2. A barrier structure according to claim 1, wherein the fitment (11) provides a second venting path (14) on a radially inner surface of said axially inner end of said fitment (11).

3. A dispensing apparatus comprising an outer container (3)
a barrier structure (7-11) according to claim 1 received in said outer container, with said flexible bag (9) disposed within the container (3) and said fitment (11) being engaged with said outer container, said venting path (10) communicating between atmosphere and a space defined between the exterior of said flexible bag (9) and the interior of said outer container (3),
the dispensing apparatus including a pump (13) connected to the fitment and in fluid communication with the dip tube (6).

4. Apparatus according to claim 3 wherein the fitment (11) provides a second venting path (14) on a radially inner surface of said axially inner end of said fitment (11), and wherein the arrangement is such that at least before the pump (13) is connected to the fitment (11), said second vent (14) provides a communication between atmosphere and the end nearer said fitment of the volume within said flexible bag (9) but outwith the dip tube (6).

5. The dispensing apparatus of claim 3 or claim 4 wherein said outer container comprises a neck portion (4) which is narrower than a body portion of the outer container and wherein said fitment (11) is engaged with the neck portion (4).

6. A method of filling a dispensing container in accordance with claim 3, prior to connection of said pump (13) to said fitment (11) the method comprising providing said barrier structure initially in a condition in which said flexible bag (9) is collapsed around the dip tube, inserting the barrier structure into the outer container (3) and engaging said fitment (11) with said outer container, expanding the bag (9) to substantially fill the container (3),
filling the expanded bag (9) with a product to be dispensed through the dip tube and thereafter attacking the pump (13) to the fitment in fluid communication with the dip tube (6).

7. A method of filling a dispensing container in accordance with claim 1, prior to connection of said pump (13) to the fitment (11), the method comprising providing said barrier structure initially in a condition in which said flexible bag (9) is collapsed around the dip tube (6), inserting the barrier structure into the outer container (3) and engaging said fitment (11) with said outer container and filling the bag (9) with a product to be dispensed through the dip tube thereby expending the bag to substantially fill the outer container (3) and attaching the pump (13) to said fitment in fluid communication with said dip tube.

8. A method according to claim 6 or claim 7 wherein, prior to the step of inserting the barrier structure into the outer container (3), the flexible bag (9) is wrapped around the dip tube (6).

9. A method according to claim 6 or claim 7 wherein, prior to the step of inserting the barrier structure into the outer container (3), the flexible bag (9) is statically adhered to the dip tube (6).

## Patentansprüche

1. Barrierenstruktur (7-11) zum Halten eines auszugebenden Produkts mit folgenden Merkmalen:
ein Zubehörteil (11) mit einem axial inneren Ende (8), wobei das Zubehörteil einen Entlüftungspfad (10) und einen flexiblen Beutel (9) aufweist, welcher dicht an dem axial inneren Ende des Zubehörteils befestigt ist, dadurch
**gekennzeichnet,**
daß die Barrierenstruktur folgendes Merkmal aufweist: ein Tauchrohr (6), das mit dem axial inneren Ende des Zubehörteils verbunden ist und sich axial innerhalb des Inneren des flexiblen Beutels (9) erstreckt.

2. Barrierenstruktur nach Anspruch 1, bei der das Zubehörteil (11) einen zweiten Entlüftungspfad (14) auf einer radial inneren Oberfläche des axial inneren Endes des Zubehörteils (11) vorsieht.

3. Ausgabevorrichtung mit einem äußeren Behälter (3),
einer Barrierenstruktur (7-11) gemäß Anspruch 1, die von dem äußeren Behälter aufgenommen wird, wobei der flexible Beutel (9) in dem Behälter (3) angeordnet ist und das Zubehörteil (11) in Eingriff mit dem äußeren Behälter ist, der Entlüftungspfad (10) in Verbindung mit der Atmosphäre steht und ein Raum zwischen der Außenseite des flexiblen Beutels (9) und der Innenseite des äußeren Behälters (3) eingegrenzt wird,
wobei die Ausgabevorrichtung eine Pumpe (13) umfaßt, welchem mit dem Zubehörteil verbunden ist und in Fluidverbindung mit dem Tauchrohr (6) steht.

4. Vorrichtung nach Anspruch 3, bei der das Zubehörteil (11) einen zweiten Lüftungspfad (14) auf einer radial inneren Oberfläche des axial inneren Endes des Zubehörteils (11) vorsieht und wobei die Anordnung so gestaltet ist, daß wenigsten vor dem Anschließen der Pumpe (13) an das Zubehörteil (11) die zweite Entlüftung (14) eine Verbindung zwischen der Atmosphäre und dem Ende des Volumens innerhalb des flexiblen Beutels (9), welches näher bei dem Zubehörteil liegt, vorsieht, jedoch ohne das Tauchrohr (6).

5. Ausgabevorrichtung nach Anspruch 3 oder 4, bei der der äußere Behälter einen Halsabschnitt (4) aufweist, der schmaler ist als ein Körperabschnitt des äußeren Behälters, und bei der das Zubehörteil (11) in Eingriff mit dem Halsabschnitt (4) ist.

6. Verfahren zum Füllen eines Ausgabebehälters nach Anspruch 3 vor dem Anschließen der Pumpe (13) an das Zubehörteil (11), mit folgenden Verfahrensschritten: Vorsehen der Barrierenstruktur am Anfang in einem Zustand, bei dem der flexible Beutel (9) um das Tauchrohr herum zusammengelegt ist, Einbringen der Barrierenstruktur in den äußeren Behälter (3) und Verbinden des Zubehörteils (11) mit dem äußeren Behälter, Ausdehnen des Beutels (9), um den Behälter (3) weitgehend zu füllen,
Füllen des ausgedehnten Behälters (9) mit einem auszugebenden Produkt über das Tauchrohr und danach Anbringen der Pumpe (13) an das Zubehörteil in Fluidverbindung mit dem Tauchrohr (6).

7. Verfahren zum Füllen eines Ausgabebehälters nach Anspruch 1 vor dem Anschließen der Pumpe (13) an das Zubehörteil (11) mit folgenden Verfahrensschritten: Vorsehen der Barrierenstruktur am Anfang in einem Zustand, bei dem der flexible Beutel (9) um das Tauchrohr (6) herum zusammengelegt ist, Einbringen der Barrierenstruktur in den äußeren Behälter (3) und Verbinden des Zubehörteils (11) mit dem äußeren Behälter und Füllen des Beutels (9) mit einem auszugebenden Produkts über das Tauchrohr, wodurch der Beutel soweit ausgedehnt wird, daß er den äußeren Behälter (3) weitgehend füllt, und Befestigen der Pumpe (13) an dem Zubehörteil in Fluidverbindung mit dem Tauchrohr.

8. Verfahren nach Anspruch 6 oder 7, bei dem vor dem Einfügen der Barrierenstruktur in den äußeren Behälter (3) der flexible Beutel (9) um das Tauchrohr (6) gewickelt wird.

9. Verfahren nach Anspruch 6 oder 7, bei dem vor dem Einfügen der Barrierenstruktur in den äußeren Behälter (3) der flexible Beutel (9) statisch an dem Tauchrohr (6) haftet.

## Revendications

1. Structure barrière (7-11) destinée à retenir un produit à distribuer, comprenant
un ensemble (11) comprenant une extrémité axialement intérieure, ledit ensemble comprenant un évent (10) et un sac souple (9) fixé de manière étanche à ladite extrémité axialement intérieure dudit ensemble,
caractérisée en ce que la structure barrière comprend
un tube plongeur (6) relié à ladite extrémité axialement intérieure dudit ensemble et s'étendant axialement à l'intérieur dudit sac souple (9).

2. Structure barrière selon la revendication 1, dans laquelle l'ensemble (11) fournit un second évent (14) sur une surface radialement intérieure de ladite extrémité axialement intérieure dudit ensemble (11).

3. Appareil distributeur comprenant un réceptacle extérieur (3),
une structure barrière (7-11) selon la revendication 1 qui est reçue dans ledit réceptacle extérieur, ledit sac flexible (9) étant disposé dans le réceptacle (3) et ledit ensemble (11) étant en prise avec ledit réceptacle extérieur, ledit évent (10) faisant communiquer l'atmosphère et un espace défini entre l'extérieur dudit sac souple (9) et l'intérieur dudit réceptacle extérieur (3),
l'appareil distributeur comprenant une pompe (13) reliée à l'ensemble et en liaison fluide avec le tube plongeur (6).

4. Appareil selon la revendication 3, dans lequel l'ensemble (11) fournit un second évent (14) sur une surface radialement intérieure de ladite extrémité axialement intérieure dudit ensemble (11), et dans lequel l'agencement est tel que, au moins avant que la pompe (13) soit reliée à l'ensemble (11), ledit second évent (14) fait communiquer l'atmosphère et l'extrémité la plus proche dudit ensemble du volume à l'intérieur dudit sac souple (9) mais à l'extérieur du tube plongeur (6).

5. Appareil distributeur selon la revendication 3 ou la revendication 4, dans lequel ledit réceptacle extérieur comprend une partie de col (4) qui est plus étroite qu'une partie de corps du réceptacle extérieur et dans laquelle ledit ensemble (11) est en prise avec la partie de col (4).

6. Procédé de remplissage d'un réceptacle de distribution selon la revendication 3, avant de relier ladite pompe (13) audit ensemble (11), ledit procédé comprenant les étapes consistant à fournir ladite structure barrière initialement dans un état dans lequel ledit sac souple (9) est replié autour du tube plongeur, à introduire la structure barrière dans le réceptacle extérieur (3) et à mettre en prise ledit ensemble (11) avec ledit réceptacle extérieur, et à déplier le sac (9) afin de remplir substantiellement le réceptacle (3),
à remplir le sac (9) déplié avec un produit à distribuer par l'intermédiaire du tube plongeur et ensuite à relier la pompe (13) à l'ensemble en liaison fluide avec le tube plongeur (6).

7. Procédé de remplissage d'un réceptacle de distribution selon la revendication 1, avant de relier ladite pompe (13) à l'ensemble (11), ledit procédé comprenant les étapes consistant à fournir ladite structure barrière initialement dans un état dans lequel ledit sac souple (9) est replié autour du tube plongeur (6), à introduire la structure barrière dans le réceptacle extérieur (3), à mettre en prise ledit ensemble (11) avec ledit réceptacle extérieur et à remplir le sac (9) avec un produit à distribuer par l'intermédiaire du tube plongeur, dépliant ainsi le sac afin de remplir substantiellement le réceptacle extérieur (3), et à relier la pompe (13) audit ensemble en liaison fluide avec ledit tube plongeur.

8. Procédé selon la revendication 6 ou la revendication 7, dans lequel, avant l'étape consistant à introduire la structure barrière dans le réceptacle extérieur (3), le sac souple (9) est enroulé autour du tube plongeur (6).

9. Procédé selon la revendication 6 ou la revendication 7, dans lequel, avant l'étape consistant à introduire la structure barrière dans le réceptacle extérieur (3), le sac souple (9) est collé électrostatiquement autour du tube plongeur (6).
